# FASCICULE DE BREVET EUROPEEN

(11) **EP 1 275 082 B1**
(45) Date de publication et mention de la délivrance du brevet: **31.03.2004**
(21) Numéro de dépôt: 01917394.7
(22) Date de dépôt: 11.04.2001
(51) Int. Cl.: G06K 19/077

(54) **ETIQUETTE ELECTRONIQUE**
ELEKTRONISCHES ETIKETT
ELECTRONIC LABEL

(30) Priorité: 18.04.2000 CH 772002000; 03.11.2000 CH 214500
(43) Date de publication de la demande: 15.01.2003
(73) Titulaire: NagraID S.A., 2300 La Chaux-de-Fonds (CH)
(72) Inventeur: DROZ, François, CH-2300 La Chaux-de-Fonds (CH)
(74) Mandataire: Wenger, Joel-Théophile
(86) Numéro de dépôt international: PCT/IB2001/000607
(87) Numéro de publication internationale: WO 2001/080173

(56) Documents cités:
- WO-A-00/03354
- WO-A-00/25263
- DE-A- 4 401 089
- US-A- 5 920 290

## Description

Cette invention concerne le domaine des étiquettes électroniques, plus particulièrement les étiquettes destinées à être placées sur un objet métallique.

On entend par étiquette électronique, un ensemble comprenant au moins un support, une antenne et une puce électronique. Cet ensemble peut comporter plusieurs antennes ou plusieurs puces selon les besoins. On les trouve en forme de bouton, dans des cartes à puce, voire dans des étiquettes à bagages. Grâce à leurs antennes, elles peuvent communiquer avec un lecteur distant. L'antenne sert non seulement comme moyen de communication, mais également à produire l'énergie nécessaire à alimenter la puce électronique.

Certaines de ces étiquettes ne comportent pas de puces électroniques mais des composants passifs tel que résistances ou fusibles. Elles sont utilisées pour identifier des objets, par exemple dans une application antivol.

Selon les modes de réalisation, l'antenne est rapportée sur le support souple ou directement gravée ou découpée sur ce même support.

Il existe de nombreuses puces qui diffèrent par leurs fonctionnalités, par exemple certaines ne permettant que la lecture d'information alors que d'autres permettent la mémorisation et la modification de leur mémoire. Ces dernières sont utilisées entre autre pour des applications de porte-monnaie électronique qui nécessite bien entendu, une lecture/écriture afin de modifier le contenu en fonction de la consommation de l'utilisateur.

Un autre champ d'application important est l'identification des objets. En effet, dans un cycle de fabrication automatique, il est indispensable que l'automate sache exactement devant quelle pièce il se trouve. La tendance dans ce type d'utilisation est de remplacer les étiquettes "code barres" par des étiquettes munies d'une puce électronique. Cela permet non seulement d'identifier l'objet mais inversement permet à l'objet de se souvenir des étapes de fabrication qu'il a franchie.

Néanmoins, le problème que rencontre ce type d'utilisation vient de la nature de l'objet. En effet, ces étiquettes fonctionnant selon le principe d'une liaison par un champ magnétique, elles sont perturbées par la proximité d'une masse métallique absorbant les ondes permettant la communication.

Afin de pallier ce défaut, il a fallu rapprocher le lecteur de l'étiquette à une distance de quelques millimètres pour rétablir la communication.

Dans certaines applications, on imagine aisément que cette contrainte de distance peut présenter des inconvénients majeurs pour des objets présentant un contour anguleux par exemple.

Il existe des solutions dans lesquelles une telle étiquette électronique comprend une couche conductrice électriquement. C'est par exemple le cas dans le document US 5'920'290 dont une des exécutions décrit un ensemble d' antenne et feuille conductrice pour la création d'un circuit en résonance. Le but d'une telle feuille, dont la structure peut être aussi bien obtenue par une métallisation que par apport de carbone, montre que le but est les moyens d'y parvenir sont loin de l'objet de la présente demande.

D'autres documents décrivent l'utilisation d'une couche conductrice à l'intérieur d'une étiquette électronique pour la réalisation des pistes nécessaires à l'acheminement des signaux électriques. C'est le cas dans le document WO00/03354 qui traite de la fabrication d'un TAG par assemblage de différentes couches. Aucune mention de fonction de réflecteur magnétique n'est présente en relation avec ces couches conductrices.

Le document WO00/25263 décrit une méthode de protection d'un transpondeur contre les décharges d'électricité statiques. Cette protection est réalisée par une feuille en matière semi-conductrice placée sur une portion de la bobine. De par sa structure, elle forme un écrêteur à diodes entre les spires de la bobine. Autrement dit, cette feuille constitue un filtre qui est chargé d'éliminer des signaux parasites engendrés par des décharges statiques ou des perturbations électromagnétiques qui pourraient nuire au bon fonctionnement du transpondeur. Une telle feuille semi-conductrice ne peut donc en aucun cas être magnéto réflectrice car son rôle se limite, au contraire, à atténuer ou à absorber des signaux électromagnétiques indésirables. D'ailleurs, ce document ne fait aucune mention de réflexion de champ électromagnétique par un composant du transpondeur ni de problèmes éventuels causés par le support où serait appliqué ce transpondeur.

Le but de la présente invention est de proposer une étiquette électronique dont la distance de lecture est nettement améliorée afin de permettre un placement de la tête de lecture moins précis.

Ce but est atteint par une étiquette électronique selon la revendication 1 dont le préambule est constitué par les caractéristiques décrites dans le document WO 00/25263.

Par élément électronique on entend soit une puce électronique, soit un composant passif tel qu'un fusible ou une résistance.

Cet élément magnéto réflecteur est placé sur la face opposée à la face de transmission du lecteur. Par la présence de cet élément, le champ magnétique est en quelque sorte réfléchi contre le lecteur au lieu de se disperser dans l'objet métallique.

La position et la forme de l'élément jouent un rôle important.

Dans une variante de l'invention, l'élément magnéto réflecteur est disposé sous la forme d'une feuille de dimensions sensiblement égales à la bobine. La distance entre la bobine et la feuille est déterminée pour obtenir les caractéristiques optimales recherchées.

Selon une autre forme de réalisation, la feuille dépasse légèrement la surface de la bobine, créant ainsi un effet de bord qui permet de capturer le champ magnétique et augmente ainsi la distance acceptable de lecture.

Les essais ont montré que la forme et la distance de la feuille sont à déterminer en fonction des caractéristiques de l'étiquette, en particulier de la fréquence de transmission. Il est ainsi possible, grâce à cette feuille magnétique, de lire une étiquette placée sur une pièce métallique à une distance acceptable pour ce type d'application.

Cette feuille peut avoir des formes géométriques non planes, par exemple elle peut remonter sur le pourtour de la bobine. Selon les besoins, cette feuille peut comporter des ouvertures dont la forme est déterminée par les caractéristiques magnétiques recherchées.

Cette feuille peut être placée directement sous la bobine ou à une distance prédéterminée, par exemple au moyen d'une couche isolante.

L'invention sera mieux comprise grâce à la description détaillée qui va suivre et qui se réfère aux dessins annexés qui sont donnés à titre d'exemple nullement limitatif, soit:
- la figure 1 représentant une étiquette électronique avec une feuille de protection selon l'invention,
- la figure 2 représentant une étiquette électronique avec un anneau de protection magnétique

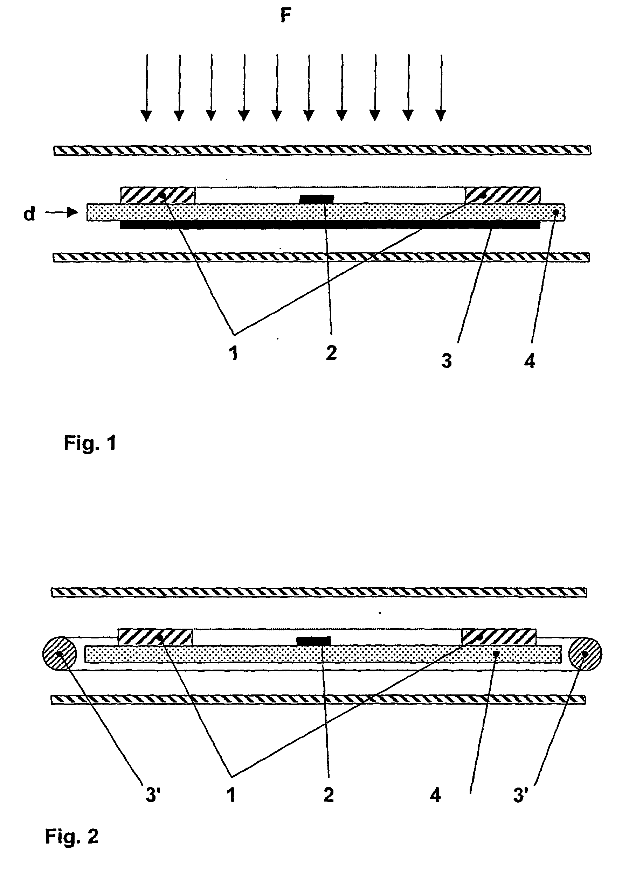

Sur la figure 1, représentant une coupe d'une étiquette électronique, on distingue la bobine 1 schématisée ainsi que la puce électronique 2. A noter que bien que cette puce soit située à l'intérieur de la bobine, elle peut être également située hors de la surface définie par la bobine.

Sous la bobine 1, est placée la feuille magnéto-réfléchissante 3 séparée par une couche isolante 4 et définissant la distance entre la bobine et la feuille magnétique. La présence de cette couche isolante n'est pas nécessaire pour obtenir l'effet souhaité, la feuille magnéto-réfléchissante pouvant être directement appliquée sur la bobine.

Cette feuille 3 est placée sur la face opposée de lecture (schématisé par les lignes de champs F), c'est-à-dire sur la face d'application de l'étiquette sur l'objet ayant des caractéristiques métalliques.

Cet ensemble peut être noyé dans une résine ou encapsulé entre deux feuilles de protection. La forme de cette étiquette peut être quelconque sous forme de carte, de bouton, ou monté sur un support souple.

Selon une variante de l'invention, illustrée par la figure 2, la feuille magnéto-réfléchissante peut prendre d'autres formes pour se placer uniquement à la périphérie de la bobine. Cet élément peut être réalisé sous la forme d'un anneau 3' de ferrite par exemple ou réalisé dans une feuille conductrice magnétiquement étampée dont le centre contiendrait la bobine.

L'effet de concentrateur de flux magnétique s'opère également si l'élément magnétique n'est pas placé sous la bobine mais sur sa proche périphérie. A ce propos, il est utile de relever qu'il n'est pas nécessaire que l'élément magnétique entoure toute la périphérie de la bobine. Des résultats positifs ont été observés en utilisant un tel élément sur une portion seulement de la périphérie de la bobine.

Cette forme de réalisation n'exclut pas l'utilisation d'une feuille magnétique telle que décrite précédemment placée sous la bobine en complément de l'élément périphérique. Il est de plus possible de réaliser ces deux parties en une seule pièce.

## Revendications

1. Étiquette électronique comprenant au moins un élément électronique (2) et une bobine (1), **caractérisée en ce que** la bobine (1) comprend au moins un élément magnéto réflecteur constitué d'un élément électro-magnétiquement conducteur (3, 3') indépendant de l'ensemble formé par le composant électronique (2) et la bobine (1).

2. Étiquette selon la revendication 1, **caractérisée en ce que** l'élément magnéto réflecteur (3, 3') couvre tout ou partie de la surface de la bobine (1).

3. Étiquette selon la revendication 1, **caractérisée en ce que** l'élément magnéto réflecteur (3, 3') est légèrement plus grand que la surface de la bobine (1 ).

4. Étiquette selon les revendications 1 à 3, **caractérisée en ce que** l'élément magnéto réflecteur (3, 3') comporte des formes tridimensionnelles.

5. Étiquette selon les revendications 1 à 4, **caractérisée en ce que** l'élément magnéto réflecteur (3, 3') comporte une ou des ouvertures dans sa surface.

6. Étiquette selon la revendication 1, **caractérisée en ce qu'**un premier élément magnéto réflecteur (3, 3') est situé sur tout ou partie de la périphérie de la bobine (1).

7. Étiquette selon la revendication 6, **caractérisée en ce que** l'élément magnéto réflecteur (3, 3') comprend une deuxième partie qui couvre tout ou partie de la surface de la bobine (1).

8. Étiquette selon la revendication 7, **caractérisée en ce que** la deuxième partie de l'élément magnéto réflecteur (3, 3') est légèrement plus grande que la surface de la bobine (1).

9. Étiquette selon les revendications 7 et 8, **caractérisée en ce que** la deuxième partie de l'élément magnéto réflecteur (3, 3') comporte des formes tridimensionnelles.

10. Étiquette selon les revendications 7 à 9, **caractérisée en ce que** la deuxième partie de l'élément magnéto réflecteur (3, 3') comporte une ou des ouvertures dans sa surface.

11. Étiquette selon les revendications 7 à 10, **caractérisée en ce que** la première et la deuxième partie de l'élément magnéto réflecteur (3, 3') sont réalisées en une seule pièce.

## Claims

1. Electronic label comprising at least one electronic element (2) and a coil (1), **characterized in that** the coil (1) includes at least one magneto reflective element constituted by an electro-magnetic conductive element (3, 3') independent of the set formed by the electronic component (2) and the coil (1).

2. Electronic label according to claim 1, **characterized in that** the magneto reflective element (3, 3') covers all or part of the surface of the coil (1).

3. Electronic label according to claim 1, **characterized in that** the magneto reflective element (3, 3') is slightly larger than the surface of the coil (1).

4. Electronic label according to claims 1 to 3, **characterized in that** the magneto reflective element (3, 3') comprises three-dimensional shapes.

5. Electronic label according to claims 1 to 4, **characterized in that** the magneto reflective element (3, 3') comprises one or several openings on its surface.

6. Electronic label according to claim 1, **characterized in that** a first magneto reflective element (3, 3') is situated on all or part of the periphery of the coil (1).

7. Electronic label according to claim 6, **characterized in that** the magneto reflective element (3, 3') comprises a second part which covers all or part of the surface of the coil (1).

8. Electronic label according to claim 7, **characterized in that** the second part of the magneto reflective element (3, 3') is slightly larger than the surface of the coil (1).

9. Electronic label according to claims 7 and 8, **characterized in that** the second part of the magneto reflective element (3, 3') comprises three-dimensional shapes.

10. Electronic label according to claims 7 to 9, **characterized in that** the second part of the magneto reflective element (3, 3') comprises one or several openings on its surface.

11. Electronic label according to claims 7 to 10, **characterized in that** the first and second parts of the magneto reflective element (3, 3') are made in a single piece.

## Patentansprüche

1. Elektronisches Etikett mit zumindest einem elektronischen Element (2) und einer Spule (1), **dadurch gekennzeichnet, dass** die Spule (1) zumindest ein magnetisch reflektierendes Element umfasst, das aus einem elektromagnetisch leitenden Element (3, 3') besteht, das von der aus der elektronischen Komponente (2) und der Spule (1) gebildeten Baugruppe unabhängig ist.

2. Etikett nach Anspruch 1, **dadurch gekennzeichnet, dass** dieses magnetisch reflektierende Element (3, 3') die Oberfläche der Spule (1) ganz oder teilweise überdeckt.

3. Etikett nach Anspruch 1, **dadurch gekennzeichnet, dass** dieses magnetisch reflektierende Element (3, 3') geringfügig grösser als die Oberfläche der Spule (1) ist.

4. Etikett nach Ansprüchen 1 bis 3, **dadurch gekennzeichnet, dass** das magnetisch reflektierende Element (3, 3') dreidimensionale Formen hat.

5. Etikett nach Ansprüchen 1 bis 4, **dadurch gekennzeichnet, dass** das magnetisch reflektierende Element (3, 3') eine Öffnung bzw. Öffnungen in seiner Oberfläche hat.

6. Etikett nach Anspruch 1, **dadurch gekennzeichnet, dass** ein erstes magnetisch reflektierendes Element (3, 3') die Peripherie der Spule (1) ganz oder teilweise umgibt.

7. Etikett nach Anspruch 6, **dadurch gekennzeichnet, dass** das magnetisch reflektierende Element (3, 3') ein zweites Teilelement hat, das die Oberfläche der Spule (1) ganz oder teilweise überdeckt.

8. Etikett nach Anspruch 7, **dadurch gekennzeichnet, dass** das zweite Teilelement des magnetisch reflektierenden Elements (3, 3') geringfügig grösser als die Oberfläche der Spule (1) ist.

9. Etikett nach Ansprüchen 7 und 8, **dadurch gekennzeichnet, dass** das zweite Teilelement des magnetisch reflektierenden Elements (3, 3') dreidimensionale Formen hat.

10. Etikett nach Ansprüchen 7 bis 9, **dadurch gekennzeichnet, dass** das zweite Teilelement des magnetisch reflektierenden Elements (3, 3') eine Öffnung bzw. Öffnungen in seiner Oberfläche hat.

11. Etikett nach Ansprüchen 7 bis 10, **dadurch gekennzeichnet, dass** das erste und zweite Teilelement des magnetisch reflektierenden Elements (3, 3') als ein einziges Teil realisiert werden.
